# EUROPEAN PATENT APPLICATION

(11) **EP 4 752 091 A1**
(43) Date of publication of application: **03.06.2026**
(21) Application number: 25217597.1
(22) Date of filing: 21.11.2025
(51) Int. Cl.: B65H 19/10, B65H 19/18, H01M 10/04

(54) **APPARATUS FOR SPLICING A FIRST RIBBON TO A SECOND RIBBON TO PERFORM A REEL CHANGE IN ELECTROCHEMICAL CELL PRODUCTION**

(30) Priority: 27.11.2024 IT 202400026718
(71) Applicant: G.D S.p.A., 40133 Bologna (BO) (IT)
(72) Inventor: GANDOLFI, Luca, I-40133 Bologna (IT); FORTINI, Massimo, I-40133 Bologna (IT); TONINI, Filippo, I-40133 Bologna (IT)
(74) Representative: Porta & Consulenti Associati S.p.A.

(57) **Abstract**

An apparatus (10) for splicing a first ribbon (100) to a second ribbon (101) comprises a first and a second retaining device (17, 20) movable between respective operating conditions in which they directly face a splicing area (GA) and respective non-operating conditions in which they are not directly facing the splicing area (GA), wherein in the operating condition they operate according to a first retaining condition in which they respectively retain a first ribbon (100) and a second ribbon (101) in the splicing area (GA) and according to a second retaining condition in which they retain both the second ribbon (100) and the first ribbon (101); a cutting device (40) for cutting the first ribbon and the second ribbon (101); a first and a second splicing device (18, 21), for splicing the first ribbon (100) to the second ribbon (101), comprising a respective pad (28, 37) for receiving and applying a piece of splicing ribbon (102), movable between a waiting condition in which it is not directly facing to the splicing area (GA) and an application condition in which it directly faces the splicing area (GA). When the first and second retaining device (17, 20) operate according to the first retaining condition, the pads (28, 37) are in the waiting condition. When the pad (28) is in the application condition, the first retaining device (17) is in the non-operating condition and the second retaining device (20) operates according to the second retaining condition.

## Description

The present invention relates to an apparatus for splicing a first ribbon to a second ribbon to perform a reel change in electrochemical cell production.

The present invention finds a preferred, although not exclusive, application in the sector of the production of electric accumulators, for the realization of which a semi-finished product with an overlapping layer structure, for example stacked, is used.

In the industrial sector of the production of electric accumulators, electrochemical cells are produced made from positive and negative electrode precursors, arranged alternately one above the other, with a separation layer in dielectric material interposed, generally indicated in the technical jargon of the sector with the term "separator".

The electrode precursors are substantially made by depositing a layer of electrode active material on one surface or both surfaces of an electrode ribbon consisting of a current collector metal sheet. By choosing an appropriate combination of electrode active material and electrode ribbon material, electrode precursors intended to make positive electrodes and electrode precursors intended to make negative electrodes can be obtained.

In the Applicant's experience, in electrochemical cell production, each electrode ribbon (anode and/or cathode) is continuously fed to a forming station for the assembly of the semi-finished product with an overlapping layer structure. For the continuous feed of the electrode ribbon for the anode and for the cathode, a respective reel is used on which a respective electrode ribbon is wound. Similarly, one or more separator ribbons are continuously fed to the forming station for the assembly of the semi-finished product with an overlapping layer structure.

When an electrode ribbon or a separator ribbon in a reel is about to run out, it is necessary to splice a final part of the ribbon being used with the initial part of a ribbon of a new reel.

In the Applicant's experience in order to splice a final part of the ribbon being used with the initial part of a ribbon of a new reel it is possible to cut two ribbons unwound, respectively, from the reel being used and from the new reel to define respective free ends of ribbon and subsequently apply a piece of splicing ribbon to both ribbons at the respective free ends.

The Applicant has verified that this splicing operation must be able to be performed in the shortest possible time to avoid machine downtime that may slow down the production of the semi-finished product with an overlapping layer structure.

The Applicant has perceived that in order to reduce machine downtime or in any case to slow down as little as possible the production of the semi-finished product with an overlapping layer structure, it would be useful to be able to have the piece of splicing ribbon available even before the two ribbons unwound from the reel being used and the new reel are cut.

The Applicant has found that by providing two retaining devices with the task of retaining the two ribbons during the cut that makes the two free ends to be spliced and by providing a splicing device equipped with a pad movable between a waiting condition, which is not facing the pad to the splicing area where the splicing must take place, and an application condition, in which the pad directly faces the splicing area, it would be possible to provide the pad with a piece of splicing ribbon even before the retaining devices act on the two ribbons. The Applicant has further found that as soon as the two splicing devices, in collaboration with a cutting device, have defined the two free ends to be spliced, it is possible to retain the two free ends with only one retaining device and move the pad into the application condition by adhering the piece of splicing ribbon to the two ribbons at the retained free ends. In this way, the piece of splicing ribbon is ready for use even before cutting the two ribbons and is applied to the two free ends immediately after making the two free ends.

The present invention therefore relates, according to a first aspect, to an apparatus for splicing a first ribbon to a second ribbon to perform a reel change in electrochemical cell production.

Preferably, the apparatus comprises a first retaining device movable between an operating condition in which it directly faces a splicing area and a non-operating condition in which it is not directly facing said splicing area.

Preferably, in the operating condition the first retaining device is configured to operate at least according to a first retaining condition in which it retains a first ribbon in the splicing area.

Preferably, in the operating condition the first retaining device is further configured to operate, when in the operating condition, according to a second retaining condition in which it retains both the second ribbon and the first ribbon in said splicing area.

Preferably, the apparatus comprises a second retaining device movable between an operating condition in which it directly faces said splicing area and a non-operating condition in which it is not directly facing said splicing area.

Preferably, the second retaining device is configured to operate according to a first retaining condition in which it retains a second ribbon in said splicing area and according to a second retaining condition in which it retains both the second ribbon and the first ribbon.

Preferably, the apparatus comprises a cutting device configured to cut the first ribbon to define a first free end of the first ribbon and to cut the second ribbon to define a first free end of the second ribbon.

Preferably, the apparatus comprises a first splicing device configured to splice the first free end of the first ribbon to the first free end of the second ribbon.

Preferably, the apparatus comprises a second splicing device configured to splice the first free end of the first ribbon to the first free end of the second ribbon.

Preferably, said first splicing device comprises a pad configured to receive and apply a piece of splicing ribbon.

Preferably, said pad is movable between a waiting condition in which said pad is not directly facing said splicing area and an application condition in which said pad directly faces said splicing area.

Preferably, said second splicing device comprises a pad configured to receive and apply a piece of splicing ribbon.

Preferably, said pad is movable between a waiting condition in which said pad is not directly facing said splicing area and an application condition in which said pad directly faces said splicing area.

Preferably, when said first retaining device operates according to the first retaining condition said pad of the first retaining device is in the waiting condition.

Preferably, when said second retaining device operates according to the first retaining condition said pad of the second retaining device is in the waiting condition.

Preferably, when said pad of first retaining device is in the application condition, said first retaining device is in the non-operating condition and said second retaining device operates according to the second retaining condition.

Preferably, when said pad of the second retaining device is in the application condition, said second retaining device is in the non-operating condition and said first retaining device operates according to the second retaining condition.

The term "ribbon" typically means a body having a length measured along a longitudinal direction, a width measured along a transverse direction orthogonal to the longitudinal direction, and a thickness measured along a direction orthogonal to both the longitudinal direction and the transverse direction, wherein the thickness is at least two orders of magnitude less than the length and at least one order of magnitude less than the width.

In a non-limiting manner, the total length of the ribbon wound on a new electrode or separator reel in electrochemical cells may be 4-8 orders of magnitude greater than its thickness and 2-4 orders of magnitude greater than its width.

By way of example, thicknesses of the electrode ribbons for the production of anode and/or cathode for electrochemical cells can be comprised from 40 to 220 µm.

By way of example, thicknesses of the separator ribbons for the production of anode and/or cathode for electrochemical cells can be comprised from 16 to 40 µm.

By "free end" of a ribbon is meant a terminal end of the ribbon transverse to the longitudinal edges of the ribbon.

By the expression "directly facing" when referred to a device or an element with respect to the splicing area, it is meant that between the device or element and the splicing area there is no obstacle, further device or further element. When a device or an element directly faces the splicing area, said device or element is placed in the splicing area or can reach the splicing area by a straight translation.

By the expression "splicing area" is meant a volume within the apparatus where the splicing between the first ribbon and the second ribbon takes place. This volume has an extension in the longitudinal direction comprised between 1 and 2 times the extension in the longitudinal direction of the piece of splicing ribbon. This volume has an extension in the transverse direction comprised between 1 and 2 times the extension in the transverse direction of the piece of splicing ribbon. This volume has an extension in a direction perpendicular to the longitudinal direction and the transverse direction comprised between 2 and 4 times the extension in the same direction of the piece of splicing ribbon.

The term "adhesive", in particular referred to an adhesive ribbon, refers to the ability of a body to stick to a surface on which it is applied, for example by means of an adhesive provided on the body.

By the expressions "in alignment" or "in mutual alignment", when referred to a mutual positioning between two free ends of a ribbon or between a free end of a ribbon and a free end of another ribbon, it is meant that a ribbon portion on which the first free end is present and a ribbon portion on which the second free end is present lie on a common lying plane.

The expression "physical contact" is understood as a direct contact between two parts or components without interposed means between the two parts or components.

The present invention may have at least one of the preferred features described below. Such features may be present individually or in combination with each other, unless expressly stated otherwise.

The first ribbon and the second ribbon to be spliced can be two ribbons of a same electrode material or two ribbons of dielectric separator.

Preferably, the apparatus comprises a first mandrel configured to receive and unwind a first reel of the first ribbon.

Preferably, the apparatus comprises a second mandrel configured to receive and unwind a second reel of the second ribbon.

The cutting of the first ribbon defines the first free end and a second free end of the first ribbon.

The cutting of the second ribbon defines the first free end and a second free end of the second ribbon.

The apparatus is configured to splice a running-out ribbon onto a reel with a further ribbon of a new reel.

Preferably, the apparatus comprises a third mandrel configured to receive and wind a reject portion of the first ribbon.

Preferably, the apparatus comprises a fourth mandrel configured to receive and wind a reject portion of the second ribbon.

When the running-out reel is the second reel placed on the second mandrel, the first reel placed on the first mandrel is preferably unwound and only partially wound on the third mandrel.

In this case, a first reject portion is preferably defined by a portion of the first ribbon that is defined by the cut performed on the first ribbon to make the first free end of the first ribbon. Said first reject portion comprises the second free end of the first ribbon. Said first reject portion is preferably wound on the third mandrel.

In this case, a second reject portion is preferably defined by a portion of the second ribbon that is defined by the cut performed to make the first free end of the second ribbon. Said second reject portion comprises the second free end of the second ribbon. Said second reject portion is preferably rewound onto the second mandrel.

When the running-out reel is the first reel placed on the first mandrel, the second reel placed on the second mandrel is preferably unwound and only partially wound on the fourth mandrel.

In this case, a first reject portion is preferably defined by a portion of the second ribbon that is defined by the cut performed on the second ribbon to make the first free end of the second ribbon. Said first reject portion comprises the second free end of the second ribbon. Said second reject portion is preferably wound on the fourth mandrel.

In this case, a second reject portion is preferably defined by a portion of the first ribbon that is defined by the cut performed to make the first free end of the first ribbon. Said second reject portion comprises the second free end of the first ribbon. Said second reject portion is preferably rewound on the first mandrel.

When the running-out reel is the second reel placed on the second mandrel, preferably the first splicing device is configured to splice the first free end of the first ribbon to the first free end of the second ribbon with the first free end of the first ribbon in physical contact with the first free end of the second ribbon.

Preferably, said physical contact is carried out head to head, wherein the first ribbon is not overlapped on the second ribbon.

Preferably, when the pad of the first splicing device is in the application condition, the pad is not reachable to receive the piece of splicing ribbon.

Preferably, said pad of the first splicing device is further movable between the waiting condition and a loading condition.

Preferably, in the loading condition said pad of the first splicing device is directly accessible for receiving the piece of splicing ribbon. Preferably, in the loading condition the pad of the first splicing device is directly accessible by a human or robotic operator to receive and retain the piece of splicing ribbon.

Preferably, in the waiting condition said pad of the first splicing device is not directly accessible. When the pad is not accessible, preferably the pad is not directly accessible by a human or robotic operator to receive and retain the piece of splicing ribbon.

Preferably, said pad of the first splicing device comprises a suction surface configured to retain said splicing ribbon. Preferably, when said pad is directly accessible said suction surface is reachable by a human or robotic operator to deposit the piece of splicing ribbon on the suction surface.

Preferably, the piece of splicing ribbon comprises an adhesive surface which, when the piece of splicing ribbon is deposited on the suction surface of the pad, faces away from the suction surface.

Preferably, when the pad of the first splicing device is in the loading condition, the first retaining device and the second retaining device are distanced from the splicing area and are not operative on the first ribbon and the second ribbon.

Preferably, said first splicing device comprises a rectilinear guide and said pad comprises a slide slidably mounted on said rectilinear guide to make the pad translatable along the splicing device between the loading condition and the waiting condition and between the waiting condition and the loading condition.

Preferably, the rectilinear guide develops along a direction parallel to said first mandrel.

Preferably the loading condition of the pad of the first splicing device is raised with respect to the waiting condition.

Preferably, the first retaining device comprises a first retaining pad and a second retaining pad.

Preferably, the first retaining pad is switchable between an active condition in which it retains by suction a respective ribbon portion and an inactive condition in which it does not retain any ribbon portion.

Preferably, the second retaining pad is switchable between an active condition in which it retains by suction a respective ribbon portion and an inactive condition in which it does not retain any ribbon portion.

Preferably, the first retaining pad and the second retaining pad comprise respective suction surfaces configured to retain a ribbon portion.

Preferably, the first retaining pad is distanced from the second retaining pad by a first distancing opening.

Preferably, the second retaining device comprises a third retaining pad and a fourth retaining pad.

Preferably, the third retaining pad is switchable between an active condition in which it retains by suction a respective ribbon portion and an inactive condition in which it does not retain any ribbon portion.

Preferably, the fourth retaining pad is switchable between an active condition in which it retains by suction a respective ribbon portion and an inactive condition in which it does not retain any ribbon portion.

Preferably, the third retaining pad and the fourth retaining pad comprise respective suction surfaces configured to retain a ribbon portion.

Preferably, the third retaining pad is distanced from the fourth retaining pad by a second distancing opening.

Preferably the cutting device comprises a cutting blade.

Preferably, the cutting blade is slidably mounted along a cutting direction extending between the third retaining pad and the fourth retaining pad.

Preferably, the cutting blade is slidably mounted along a cutting direction extending parallel to the first mandrel.

Preferably, the cutting blade slides in the second distancing opening between the third retaining pad and the fourth retaining pad.

Preferably, the cutting blade slides in the first distancing opening between the first retaining pad and the second retaining pad.

Preferably, the cutting blade slides both in the first distancing opening and the second distancing opening.

Preferably, when the cutting blade moves along the cutting direction, the first splicing device is in the operating condition.

Preferably, when the cutting blade moves along the cutting direction, the first splicing device operates according to the first retaining condition in which it retains the first ribbon in the splicing area.

Preferably, when the cutting blade moves along the cutting direction, the second splicing device operates according to the first retaining condition in which it retains the second ribbon in the splicing area.

Preferably, when the cutting blade moves along the cutting direction, the pad of the first splicing device is not directly facing the splicing area and is not directly accessible.

Preferably, the apparatus comprises a first frame translatable between a neared position to said splicing area and a distanced position from said splicing area.

Preferably, when the second retaining device operates according to the second retaining condition the third retaining pad and the fourth retaining pad are in the active condition.

Preferably, when the first frame is in the distanced position and when the second retaining device operates according to the second retaining condition the first retaining pad and the second retaining pad are in the inactive condition.

Preferably, said first splicing device is rotatably mounted on said first frame about a first splicing rotation axis to rotate said pad with respect to said first frame between the waiting condition and the application condition.

Preferably, the first splicing device rotates about the first splicing rotation axis only when the first frame is in the distanced position from the splicing area.

Preferably, the first splicing device rotates about the first splicing rotation axis by an angle comprised between about 45° and about 180°, more preferably comprised between about 90° and about 180°, for example about 90°, to pass between the waiting condition and the application condition.

Preferably, the rotation of the first splicing device from the waiting condition to the application condition places the first splicing device in the current position occupied by the first retaining device. Preferably, the rotation of the first splicing device from the waiting condition to the application condition causes the first splicing device to pass from the operating condition to the non-operating condition.

Preferably, said first retaining device is rotatably mounted on said first frame about a first retaining rotation axis to rotate between the operating condition and the non-operating condition.

Preferably, the first retaining device rotates about the first retaining rotation axis only when the first frame is in the distanced position from the splicing area.

Preferably, the first retaining device rotates about the first retaining rotation axis by an angle comprised between about 45° and about 180°, more preferably comprised between about 90° and about 180°, for example about 90°, to pass between the operating condition and the non-operating condition.

Preferably, the angle of rotation of the first splicing device about the first splicing rotation axis to pass from the waiting condition to the application condition is equal to the angle of rotation of the first retaining device about the first retaining rotation axis to pass from the operating condition to the non-operating condition.

Preferably, the first retaining rotation axis is parallel to the first mandrel.

Preferably, the first splicing rotation axis is parallel to the first mandrel.

Preferably, said first retaining rotation axis is parallel to said first splicing rotation axis. More preferably, said first retaining rotation axis coincides with said first splicing rotation axis.

Preferably, said first splicing device and said first retaining device are made integral by rotations about the first splicing rotation axis and the first retaining rotation axis, respectively, with respect to said first frame.

Preferably, the apparatus comprises a second frame translatable between a neared position to said splicing area and a distanced position from said splicing area.

Preferably, said second retaining device is mounted on said second frame.

Preferably, when the first retaining device operates according to the first retaining condition, the first frame and the second frame are both in the neared position to the splicing area.

Preferably, when the second retaining device operates according to the first retaining condition, the first frame and the second frame are both in the neared position to the splicing area.

Preferably, when the first retaining device operates according to the first retaining condition also the second retaining device operates according to the first retaining condition.

Preferably, the first splicing device rotates about the first splicing rotation axis when the second frame is in the position neared by the splicing area.

Preferably, in the loading condition of said pad of the first splicing device, the first frame is in the distanced position from the splicing area.

Preferably, in the loading condition of said pad of the first splicing device, the second frame is in the distanced position from the splicing area.

Preferably, when the cutting blade slides along the cutting direction the first frame and the second frame are in neared positions to the splicing area.

Preferably, the cutting blade is slidably mounted on said second frame.

Preferably, the first splicing device is used when the running-out reel is the second reel placed on the second mandrel.

Preferably, the second splicing device is used when the running-out reel is the first reel placed on the first mandrel.

When the running-out reel is the first reel placed on the first mandrel, preferably the second splicing device is configured to splice the first free end of the first ribbon to the first free end of the second ribbon with the first free end of the first ribbon in physical contact with the first free end of the second ribbon.

Preferably, when the pad of the second splicing device is in the application condition, the pad is not reachable to receive the piece of splicing ribbon.

Preferably, in the loading condition said pad of the second splicing device is directly accessible for receiving the piece of splicing ribbon. Preferably, in the loading condition the pad of the second splicing device is directly accessible by a human or robotic operator to receive and retain the piece of splicing ribbon.

Preferably, in the waiting condition said pad of the second splicing device is not directly accessible.

Preferably, said pad of the second splicing device comprises a suction surface configured to retain said splicing ribbon. Preferably, when said pad of the second splicing device is directly accessible said suction surface is reachable by a human or robotic operator to deposit the piece of splicing ribbon on the suction surface.

Preferably, the adhesive surface of the piece of splicing ribbon faces away from the suction surface.

Preferably, when the pad of the second splicing device is in the loading condition, the second retaining device and the first retaining device are distanced from the splicing area and are not operative on the first ribbon and the second ribbon.

Preferably, said second splicing device comprises a rectilinear guide and said pad comprises a slide slidably mounted on said rectilinear guide to make the pad translatable along the second splicing device between the loading condition and the waiting condition and between the waiting condition and the loading condition.

Preferably, the rectilinear guide develops along a direction parallel to said second mandrel.

Preferably the loading condition of the pad of the second splicing device is raised with respect to the waiting condition.

Preferably, when the cutting blade moves along the cutting direction, the pad of the second splicing device is not directly facing the splicing area and is not directly accessible.

Preferably, said second splicing device is rotatably mounted on said second frame about a second splicing rotation axis to rotate said pad with respect to said second frame between the waiting condition and the application condition.

Preferably, the second splicing device rotates about the second splicing rotation axis only when the second frame is in the distanced position from the splicing area.

Preferably, the second splicing device rotates about the second splicing rotation axis by an angle comprised between about 45° and about 180°, more preferably comprised between about 90° and about 180°, for example about 90°, to pass between the waiting condition and the application condition.

Preferably, the rotation of the second splicing device from the waiting condition to the application condition places the second splicing device in the current position occupied by the second retaining device. Preferably, the rotation of the second splicing device from the waiting condition to the application condition causes the second splicing device to pass from the operating condition to the non-operating condition.

Preferably, said second retaining device is rotatably mounted on said second frame about a second retaining rotation axis to rotate between the operating condition and the non-operating condition.

Preferably, the second retaining device rotates about the second retaining rotation axis only when the second frame is in the distanced position from the splicing area.

Preferably, the second retaining device rotates about the second retaining rotation axis by an angle comprised between about 45° and about 180°, more preferably comprised between about 90° and about 180°, for example about 90°, to pass between the operating condition and the non-operating condition.

Preferably, the angle of rotation of the second splicing device about the second splicing rotation axis to pass from the waiting condition to the application condition is equal to the angle of rotation of the second retaining device about the second retaining rotation axis to pass from the operating condition to the non-operating condition.

Preferably, the second retaining rotation axis is parallel to the second mandrel.

Preferably, the second splicing rotation axis is parallel to the second mandrel.

Preferably, the second retaining rotation axis is parallel to said second splicing rotation axis. More preferably, said second retaining rotation axis coincides with said second splicing rotation axis.

Preferably, said second splicing device and said second retaining device are made integral by rotations about the second splicing rotation axis and the second retaining rotation axis, respectively, with respect to said second frame.

Preferably, the pad of the first splicing device and the pad of the second splicing device are never at the same time in the respective application condition.

Preferably, when the pad of the first splicing device is in the application condition, the pad of the second splicing device is in the waiting condition.

Preferably, when the pad of the second splicing device is in the application condition, the pad of the first splicing device is in the waiting condition.

The present invention relates, in a second aspect, to a machine configured for the production of electrochemical cells comprising an electrode and separator ribbon feed station, a forming station configured to package said electrode and separator ribbons forming a semi-finished product with an overlapping layer structure.

Preferably, the electrode and separator ribbon feed station comprises at least one apparatus in accordance with the first aspect of the invention.

Preferably, the electrode and separator ribbon feed station comprises an apparatus in accordance with the first aspect of the invention for each electrode ribbon.

Preferably, the electrode and separator ribbon feed station comprises an apparatus in accordance with the first aspect of the invention for each electrode ribbon and for the separator ribbon.

The present invention relates, in a third aspect, to a method for the production of electrochemical cells, comprising feeding electrode and separator ribbons in reels, cutting said electrode and separator ribbons into pieces of electrode and separator ribbons, forming a semi-finished product with an overlapping layer structure with said pieces of electrode and separator ribbons.

Preferably, when a reel of electrode or separator ribbon is running out, a reel change is to be performed using an apparatus for splicing a first ribbon to a second ribbon in accordance with the first aspect of the present invention.

Preferably, when a reel of a ribbon of an electrode is running out, a reel change is to be performed using an apparatus for splicing a first ribbon of said electrode to a second ribbon of said electrode in accordance with the first aspect of the present invention.

Further features and advantages of the present invention will be better apparent from the following detailed description of a preferred embodiment thereof, with reference to the appended drawings and provided by way of indicative and non-limiting example, wherein:
- figure 1 is a schematic view of the apparatus for splicing a first ribbon to a second ribbon to perform a reel change in electrochemical cell production in accordance with the present invention;
- figures 2 and 3 are perspective schematic views of some details of the apparatus of figure 1;
- figures 4 and 5 are perspective schematic views of some components of the details of figure 2 and 3;
- figures 6 to 13 are schematic views of the apparatus of figure 1 under different operating conditions; and
- figure 14 is a block diagram representative of a machine for making electrochemical cells in accordance with a further aspect of the present invention.

In the figures, an apparatus for splicing a first ribbon 100 to a second ribbon 101 to perform a reel change in electrochemical cell production in accordance with the present invention is indicated as a whole with the number 10.

The first ribbon 100 and the second ribbon 101 may be electrode ribbons configured to define the cathode portion of an electrochemical cell. Alternatively, the first ribbon 100 and the second ribbon 101 may be electrode ribbons configured to define the anode portion of an electrochemical cell. Alternatively, the first ribbon 100 and the second ribbon 101 may be ribbons configured to define a dielectric separator of an electrochemical cell. In any case, the first ribbon 100 and the second ribbon 101 are made of a same material.

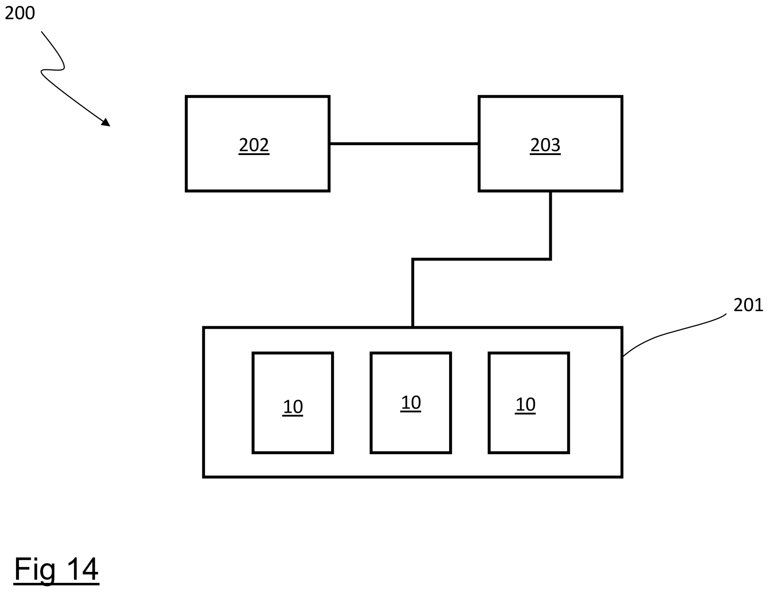

In figure 14, a machine 200 configured for the production of electrochemical cells is schematically illustrated. The machine 200 comprises a ribbon feed station 201. The ribbon feed station 201 may feed a cathode electrode ribbon, an anode electrode ribbon, and one or more dielectric separator ribbons. The machine 200 further comprises a forming station 202 configured to package the electrode and separator ribbons forming a semi-finished product with an overlapping layer structure. Such a semi-finished product with an overlapping layer structure can be a substantially spiral winding, also known as a "jelly roll", of a piece of cathode electrode ribbon, a piece of anode electrode ribbon and one or more pieces of dielectric separator ribbons, or a multilayer in which a piece of cathode electrode ribbon, a piece of dielectric separator ribbon and a piece of anode electrode ribbon are alternated several times in a stack, or still a multilayer in which a piece of cathode electrode ribbon and a piece of anode electrode ribbon alternate several times in a stack with interposed between the pieces of electrode ribbon a piece of dielectric separator ribbon, arranged in a serpentine or bag shape, enclosing one of the two pieces of electrode ribbon. In the forming station 202 or before the forming station 202 there is provided a cutting station 203 configured to cut the continuous ribbons coming from the feed station 201 to make the aforementioned pieces of ribbon. The operation of cutting the ribbons can take place temporarily before the ribbons enter the forming station 202, forming the pieces of ribbon before the packaging operation or when the ribbons are already at least partially inside the forming station 202, as in the case of "jelly rolls", where the cutting into pieces can take place after the winding of the semi-finished product has already begun. At least one apparatus 10 is provided in the feed station 201. Preferably, at least three apparatuses 10 are provided, in particular an apparatus 10 for splicing two cathode electrode ribbons, an apparatus 10 for splicing two anode electrode ribbons and an apparatus 10 for splicing two dielectric separator ribbons.

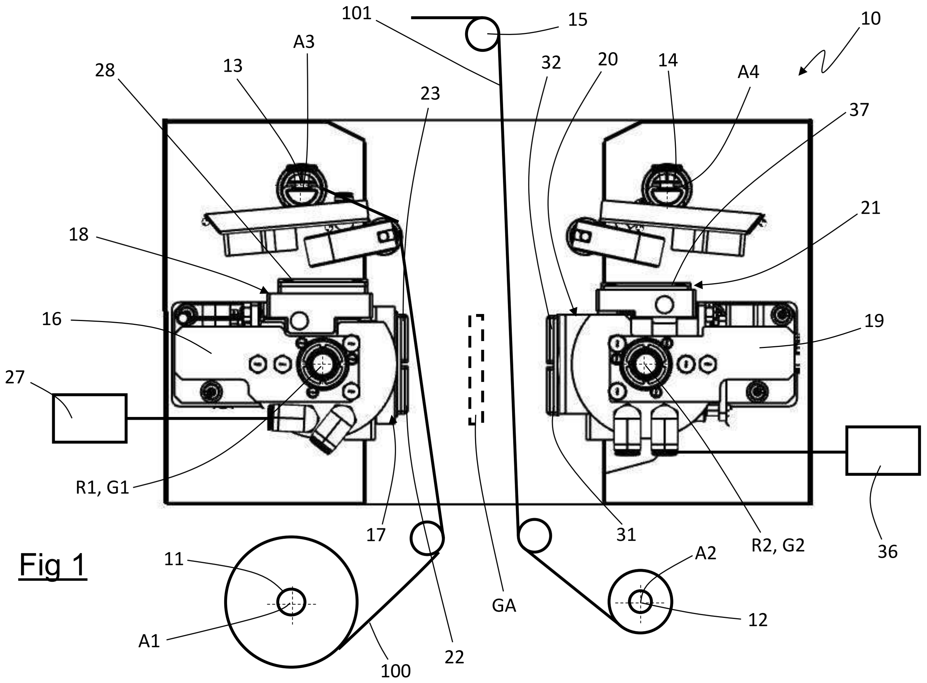

As schematically illustrated in figure 1, the apparatus 10 comprises a first winding mandrel 11 configured to receive a reel of the first ribbon 100 and a second winding mandrel 12 configured to receive a reel of the second ribbon 101. The first mandrel 11 is rotatable about a respective first axis A1 and the second mandrel 12 is rotatable about a respective second axis A2. The two axes A1, A2 of the first mandrel 11 and the second mandrel 12 are parallel to each other. The apparatus 10 comprises a third winding mandrel 13 configured to receive the first ribbon 100 and a fourth winding mandrel 14 configured to receive the second ribbon 101. The third mandrel 13 is rotatable about a respective first axis A3 and the fourth mandrel 14 is rotatable about a respective second axis A4. The two axes A3, A4 of the third mandrel 13 and the fourth mandrel 14 are parallel to each other. The two axes A3, A4 of the third mandrel 13 and the fourth mandrel 14 are parallel to the axes A1, A2 of the first mandrel 11 and the second mandrel 12. The apparatus further comprises a return roller 15 configured to receive the first 100 or second ribbon 101 to direct it towards a forming station (not illustrated) for packaging semi-finished products with an overlapping layer structure.

As schematically illustrated in figure 1, the apparatus 10 further comprises a first frame 16 on which a first retaining device 17 and a first splicing device 18 are mounted. The first frame 16 is interposed between the first mandrel 11 and the third mandrel 13. The apparatus further comprises a second frame 19 on which a second retaining device 20 and a second splicing device 21 are mounted. The second frame 19 is interposed between the second mandrel 12 and the fourth mandrel 14.

In a region located between the first frame 16 and the second frame 19, a splicing area GA is defined, in which the first ribbon 100 is spliced to the second ribbon 101 to perform a reel change.

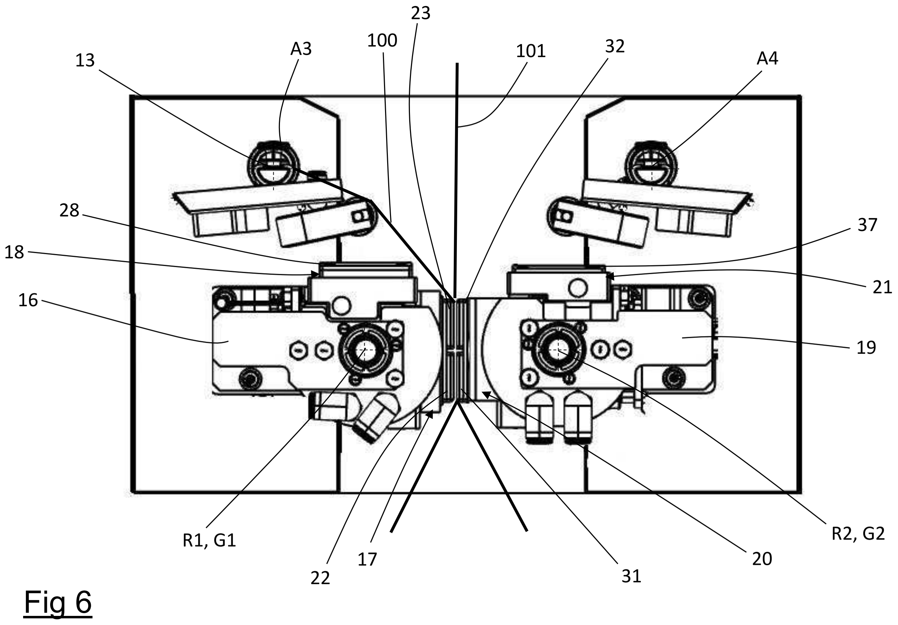

The first frame 16 is movable between a distanced position from the splicing area GA (as schematized for example in figure 1) and a neared position to the splicing area GA (for example illustrated in figure 6).

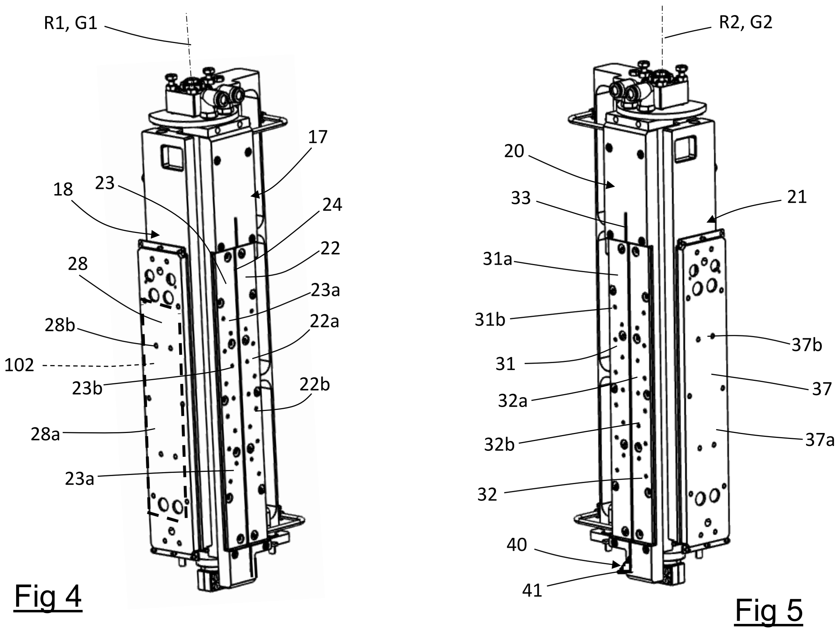

As schematically illustrated in figure 4, the first retaining device 17 comprises a first retaining pad 22 and a second retaining pad 23. The first retaining pad 22 precedes the second retaining pad 23 along an advancement direction of the first ribbon 100. This advancement direction is directed from the first mandrel 11 towards the third mandrel 13 or towards the return roller 15. The first retaining pad 22 is distanced from the second retaining pad 23 by a first distancing opening 24, such that an empty space is defined between the first retaining pad 22 and the second retaining pad 23. The first retaining pad 22 and the second retaining pad 23 comprise respective suction holes 25, 26 placed in fluid communication with an aspirator 27 (diagrammed in figure 4). The suction holes 25, 26 are open on respective suction surfaces 22a, 23a of the first splicing pad 22 and the second splicing pad 23. The first retaining pad 22 may be activated independently of the second retaining pad 23, as well as the second retaining pad 23 may be activated independently of the first retaining pad 22. The activation of a retaining pad results in a suction action through the suction holes thereof. When the first retaining pad 22 is active and the second retaining pad 23 is not active, or when the first retaining pad 22 is not active and the second retaining pad 23 is active, the first retaining device 17 operates according to a first operating condition.

When both the first retaining pad 22 and the second retaining pad 23 are active, the first retaining device 17 operates according to a second operating condition.

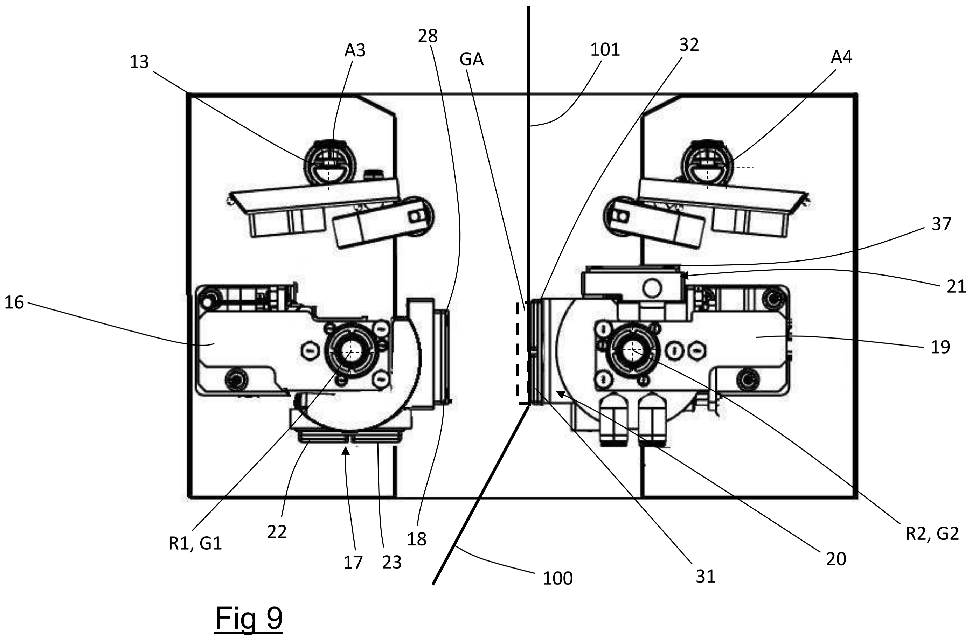

The first retaining device 17 is rotatably mounted on the first frame 16 about a first retaining rotation axis R1 parallel to the axis A1 of the first mandrel 11. The rotation of the first retaining device 17 with respect to the first frame 16 switches the first retaining device 17 between an operating condition and a non-operating condition. The operating condition and the non-operating condition are distanced from one another by an angle of 90° of rotation about the first retaining rotation axis R1. In the operating condition, for example illustrated in figure 1, the first retaining device 17 directly faces the splicing area GA. In the non-operating condition, for example illustrated in figure 9, the first retaining device 17 is not facing the splicing area GA. In the operating condition, the first retaining pad 22 and the second retaining pad 23 can be activated while in the non-operating condition the first retaining pad 22 and the second retaining pad 23 cannot be activated. The first retaining device 17 operates according to the first operating condition or according to the second operating condition only when the first retaining device 17 is in the operating condition.

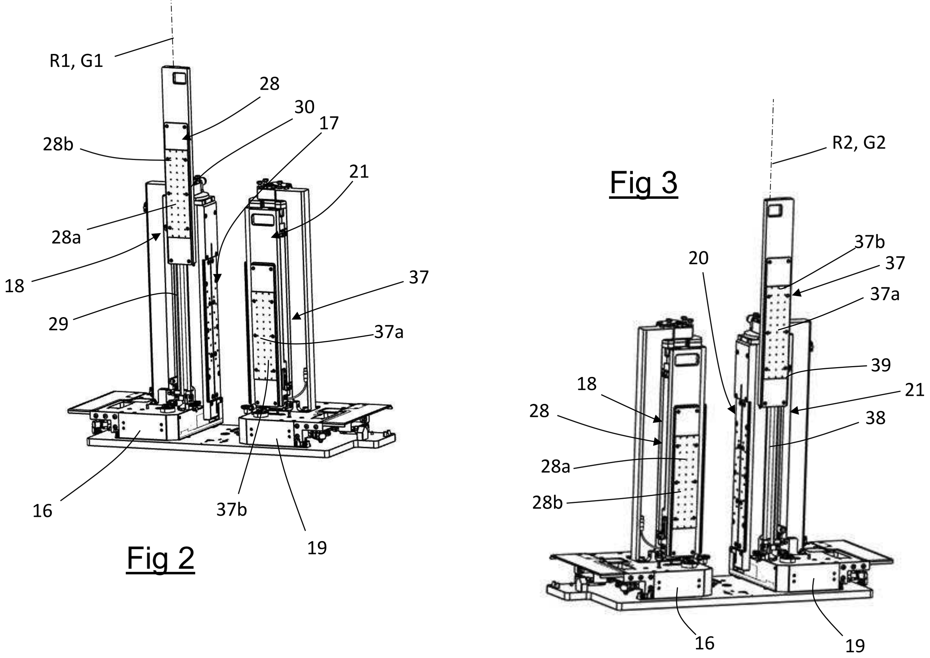

The first splicing device 18, schematized in figures 2 and 4, comprises a pad 28. The pad 28 comprises suction holes 28b placed in fluid communication with the aspirator 27 or with a further aspirator (not shown). The suction holes 28b are open on a suction surface 28a of the pad 28. The pad 28 is slidably mounted on the splicing device 17 in such a way as to be able to slide along a direction substantially parallel to the axis A1 of the first mandrel 11. The sliding of the pad 28 with respect to the first splicing device 18 switches the pad 28 between a loading condition, illustrated in figure 2, and a waiting condition, illustrated in figure 4. For this purpose, the first splicing device comprises a rectilinear guide 29, illustrated in figure 2. The rectilinear guide 29 is slidably engaged by a slide 30 of the pad 28. The actuation of the slide 30 along the rectilinear guide 29 is preferably done pneumatically. When the pad 28 is in the loading condition, the pad 28 is brought to a position where the suction surface 28a can be directly reached by an operator. The pad 28 is configured to receive on its own suction surface 28a a piece of splicing ribbon 102 (schematized in figure 4) when the pad is in the loading condition. The suction surface 28a of the pad retains the piece of splicing ribbon 102. When the pad 28 returns into the waiting condition, the piece of splicing ribbon 102 continues to be retained on the suction surface 28a. In the waiting condition, the pad 28 is not directly reachable to position the piece of splicing ribbon 102 on the suction surface 28a. The passage between the waiting condition and the loading condition and between the loading condition and the waiting condition occurs only when the first frame 16 is in the distanced position.

The first splicing device 18 is rotatably mounted on the first frame 16 about a first splicing rotation axis G1 parallel to the axis A1 of the first mandrel 11. The rotation of the first splicing device 18 with respect to the first frame 16 switches the first splicing device 18 between the waiting condition and an application condition. The waiting condition and the application condition are distanced from one another by an angle of 90° of rotation about the first splicing rotation axis G1. In the application condition, for example illustrated in figure 9, the first splicing device 18 directly faces the splicing area GA. In the waiting condition, for example illustrated in figure 1, the first splicing device 18 is not facing the splicing area GA. The first splicing device 18 cannot pass directly from the loading condition to the application condition but it is always necessary that it is switched from the loading condition to the waiting condition before it can pass to the application condition. The first splicing rotation axis G1 coincides with the first retaining rotation axis R1.

The first splicing device 18 rotates integrally with the first retaining device 17. When the first retaining device 17 is in the operating condition, the first splicing device 18 is in the waiting condition (or in the loading condition). When the retaining device 17 is in the non-operating condition, the first splicing device 18 is in the application condition. The rotation of the first retaining device 17 about the first retaining rotation axis R1 occurs only when the first frame 16 is in the distanced position from the splicing area GA. The rotation of the first splicing device 18 about the first splicing rotation axis G1 occurs only when the first frame 16 is in the distanced position from the splicing area GA.

The second frame 19 is movable between a distanced position from the splicing area GA (as schematized for example in figure 1) and a neared position to the splicing area GA (for example illustrated in figure 6).

As schematically illustrated in figure 5, the second retaining device 20 comprises a third retaining pad 31 and a fourth retaining pad 32. The third retaining pad 31 precedes the fourth retaining pad 32 along an advancement direction of the second ribbon 101. This advancement direction is directed from the second mandrel 12 towards the fourth mandrel 14 or towards the return roller 15. The third retaining pad 31 is distanced from the fourth retaining pad 32 by a second distancing opening 33, such that an empty space is defined between the third retaining pad 31 and the fourth retaining pad 32. The third retaining pad 31 and the fourth retaining pad 32 comprise respective suction holes 34, 35 placed in fluid communication with an aspirator 36 (schematized in figure 5). The suction holes 34, 35 are open on respective suction surfaces 34a, 35a of the third splicing pad 31 and the fourth splicing pad 32. The third retaining pad 31 may be activated independently of the fourth retaining pad 32, as well as the fourth retaining pad 32 may be activated independently of the third retaining pad 31. The activation of a retaining pad results in a suction action through the suction holes thereof. When the third retaining pad 31 is active and the fourth retaining pad 32 is not active, or when the third retaining pad 31 is not active and the fourth retaining pad 32 is active, the second retaining device 20 operates according to a first operating condition. When both the third retaining pad 31 and the fourth retaining pad 32 are active, the second retaining device 20 operates according to a second operating condition.

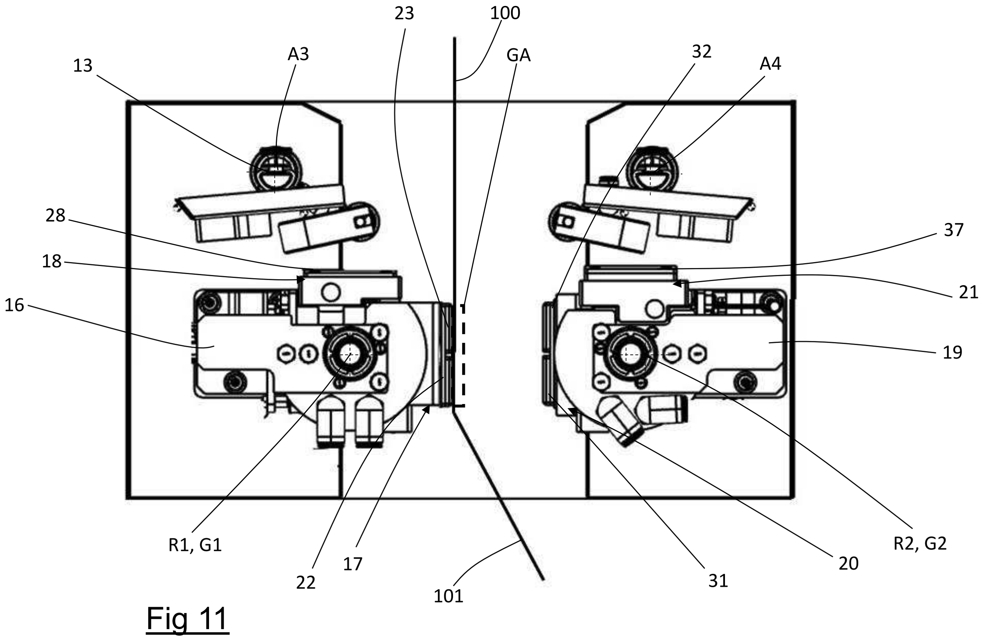

The second retaining device 20 is rotatably mounted on the second frame 19 about a second retaining rotation axis R2 parallel to the axis A2 of the second mandrel 12. The rotation of the second retaining device 20 with respect to the second frame 19 switches the second retaining device 20 between an operating condition and a non-operating condition. The operating condition and the non-operating condition are distanced from one another by an angle of 90° of rotation about the second retaining rotation axis R2. In the operating condition, for example illustrated in figure 1, the second retaining device 20 directly faces the splicing area GA. In the non-operating condition, for example illustrated in figure 11, the second retaining device 20 is not facing the splicing area GA. In the operating condition, the third retaining pad 31 and the fourth retaining pad 32 can be activated while in the non-operating condition the third retaining pad 31 and the fourth retaining pad 32 cannot be activated. The second retaining device 20 operates according to the first operating condition or according to the second operating condition only when the second retaining device 20 is in the operating condition.

The second splicing device 21, schematized in figures 3 and 5, comprises a pad 37. The pad 37 is identical in structure, operation and implementation to the pad 28 of the first splicing device 18. The pad 37 comprises suction holes 37b placed in fluid communication with the aspirator 36 or with an additional aspirator (not shown). The suction holes 37b are open on a suction surface 37a of the pad 37. The pad 37 is slidably mounted on the second splicing device 21 such that it can slide along a direction substantially parallel to the axis A2 of the second mandrel 12. The sliding of the pad 37 with respect to the second splicing device 21 switches the pad 37 between a loading condition, illustrated in figure 3, and a waiting condition, illustrated in figure 5. For this purpose, the second splicing device 21 comprises a rectilinear guide 38, illustrated in figure 3. The rectilinear guide 38 is slidably engaged by a slide 39 of the pad 37. The actuation of the slide 39 along the rectilinear guide 38 is preferably done pneumatically. When the pad 37 is in the loading condition, the pad 37 is brought to a position in which the suction surface 37a can be directly reached by an operator. The pad 37 is configured to receive on its own suction surface 37a a piece of splicing ribbon 102 (schematized in figure 3) when the pad is in the loading condition. The suction surface 37a of the pad retains the piece of splicing ribbon 102. When the pad 37 returns to the waiting condition, the piece of splicing ribbon 102 continues to be retained on the suction surface 37a. In the waiting condition, the pad 37 is not directly reachable to position the piece of splicing ribbon 102 on the suction surface 38a. The passage between the waiting condition and the loading condition and between the loading condition and the waiting condition occurs only when the second frame 19 is in the distanced position.

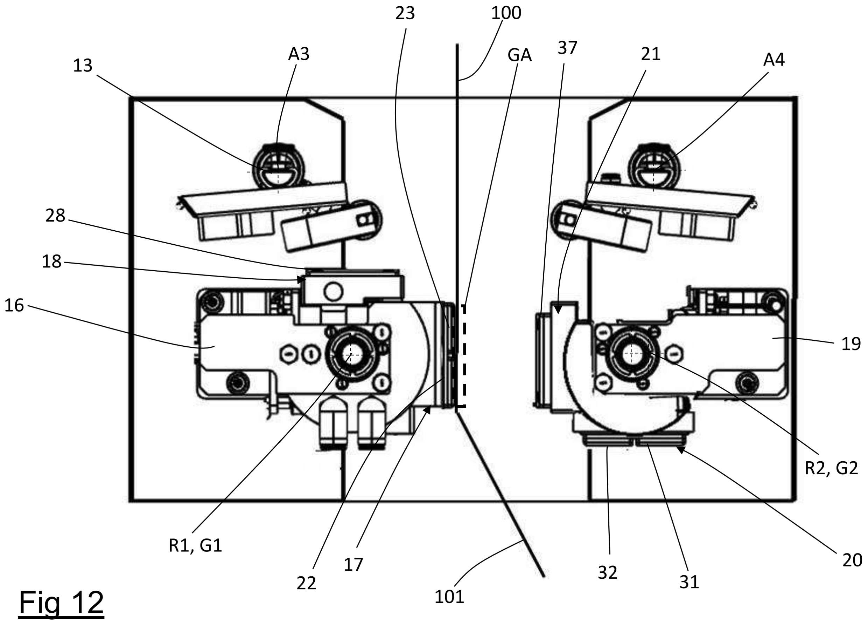

The second splicing device 21 is rotatably mounted on the second frame 19 about a second splicing rotation axis G2 parallel to the axis A2 of the second mandrel 11. The rotation of the second splicing device 21 with respect to the second frame 19 switches the second splicing device 21 between the waiting condition and an application condition. The waiting condition and the application condition are distanced from one another by an angle of 90° of rotation about the second splicing rotation axis G2. In the application condition, for example illustrated in figure 12, the second splicing device 21 directly faces the splicing area GA. In the waiting condition, for example illustrated in figure 1, the second splicing device 21 is not facing the splicing area GA. The second splicing device 21 cannot pass directly from the loading condition to the application condition but it is always necessary that it is switched from the loading condition to the waiting condition before it can pass to the application condition. The second splicing rotation axis G2 coincides with the second retaining rotation axis R2. The second splicing rotation axis G2 is parallel to the first splicing rotation axis G1.

The second splicing device 21 rotates integrally with the second retaining device 20. When the second retaining device 20 is in the operating condition, the second splicing device 21 is in the waiting condition (or in the loading condition). When the second retaining device 20 is in the non-operating condition, the second splicing device 21 is in the application condition. The rotation of the second retaining device 20 about the second retaining rotation axis R2 occurs only when the second frame 19 is in the distanced position from the splicing area GA. The rotation of the second splicing device 21 about the second splicing rotation axis G2 occurs only when the second frame 19 is in the distanced position from the splicing area GA.

The apparatus 10 further comprises a cutting device 40. The cutting device 40 is configured to cut the first ribbon 100 to define a first free end of the first ribbon 100 and to cut the second ribbon 101 to define a first free end of the second ribbon 101. As schematized in figure 5, the cutting device 40 comprises a cutting blade 41. The cutting blade 41 is slidably mounted along a cutting direction parallel to the first axis A1 of the first mandrel 11 and the second axis A2 of the second mandrel 12. The cutting blade 41 is slidably mounted on the second retaining device 20. The cutting blade 41 is slidably mounted in the second distancing opening 33. The cutting blade 41, when non-operating, is placed outside the encumbrance of the third retaining pad 31 and the fourth retaining pad 32. When the cutting blade 41 is operative, the cutting blade 41 slides in the second distancing opening 33. The cutting blade 41 protrudes, in a direction perpendicular to a lying plane of the third retaining pad 31, with respect to the third retaining pad 31 and the fourth retaining pad 32. The cutting blade 41 is further configured to slide within the first distancing opening 24 between the first retaining pad 22 and the second retaining pad 23. When the cutting blade slides within the second distancing opening 33, the second retaining device 20 is in the operating condition and the second frame 19 is in the neared position. When the cutting blade slides within the second distancing opening 33, the first retaining device 17 is in the operating condition and the first frame 16 is in the neared position.

In another embodiment (not depicted in the figures) the cutting device 40 may comprise, as an alternative to the cutting blade 41, a hot wire mounted in the second distancing opening 33 and, when non-operating, placed inside the second retaining device 20. When the hot wire is operative, it comes out from the second retaining device 20 through the second distancing opening 33. This embodiment can be advantageously used for cutting a separator ribbon.

In use, it is possible to operate the apparatus 10 to splice, in a first case of splicing, the first ribbon 100 to the second ribbon 101 when the second ribbon 101 mounted on the second mandrel 12 is running out, and, in a second case of splicing, to splice the first ribbon 100 to the second ribbon 101 when the first ribbon 100 mounted on the first mandrel 11 is running out.

In the first case of splicing, the first ribbon 100 is loaded on the first mandrel 11, is partially unwound and brought on the third mandrel 13 where it is partially wound. The second ribbon 101 is already mounted on the second mandrel 12 and driven by the return roller 15, as schematized in figure 1. The first frame 16 and the second frame 19 are in the distanced condition from the splicing area GA.

Before loading the first ribbon 100 onto the first mandrel 11 or thereafter, the pad 28 of the first splicing device 18 is placed in the loading condition to apply a piece of splicing ribbon 102 onto the suction surface 28a of the pad 28. This operation is carried out by resting the non-adhesive surface of the piece of splicing ribbon 102 on the suction surface. This operation is carried out with the first retaining device 17 directly facing the splicing area GA. This operation is carried out with the first retaining pad 22 and the second retaining pad 24 not active. This condition provides that the suction surfaces 22a, 23a are not sucking air from the surrounding environment. This operation is also carried out with the second retaining device 20 directly facing the splicing area GA and with the third retaining pad 31 and the fourth retaining pad 32 not active.

When the pad 28 of the first splicing device 18 receives the piece of splicing ribbon 102, the pad 28 is brought into the waiting condition, without the first retaining device 17 and the second retaining device 20 being actuated or shifted.

Subsequently, the first frame 16 and the second frame 19 are simultaneously brought into the advanced condition, as schematically illustrated in figure 6.

During this operation, the first retaining pad 22 and the second retaining pad 23 contact the first ribbon 100 and the third retaining pad 31 and the fourth retaining pad 32 contact the second ribbon 101. The first retaining device 17 and the second retaining device 20 are operated according to the respective second operating conditions. This operation is carried out with the first retaining pad 22, the second retaining pad 24, the third retaining pad 31 and the fourth retaining pad 32 active. This condition provides that the respective suction surfaces suck air from the surrounding environment. In this way, the first ribbon 100 is retained by the first retaining device 17 and the second ribbon is retained by the second retaining device 20 in the splicing area GA.

By maintaining the configuration reached by the apparatus 10, the cutting device 40 is actuated. The cutting blade 41 slides along the cutting direction and cuts both the first ribbon 100 and the second ribbon 101. This cut defines a first free end of the first ribbon 100 on the portion of the first ribbon 100 wound on the first mandrel 11 and a first free end of the second ribbon 101 on the portion of the second ribbon 101 that reaches the return roller 15.

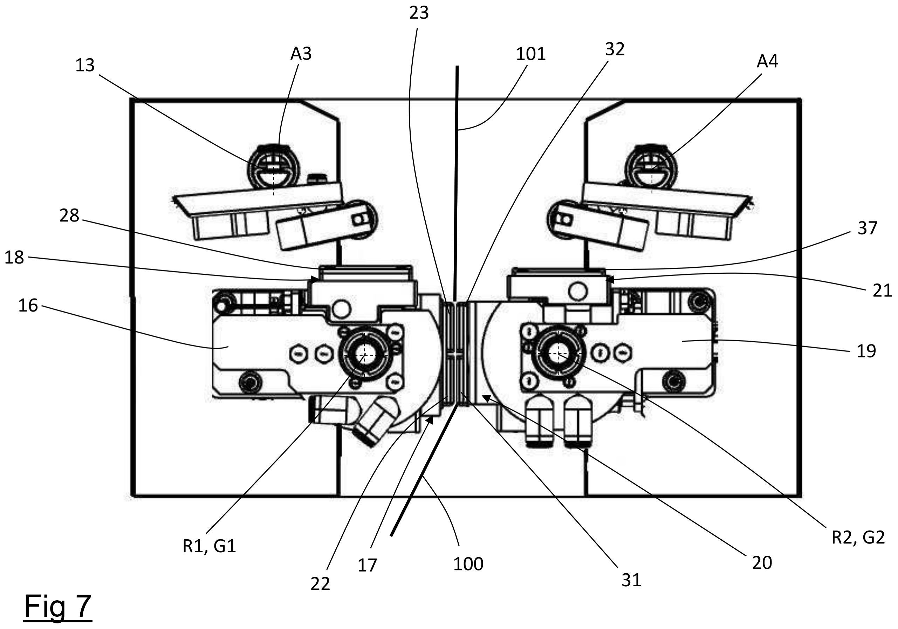

At this point, possibly by shifting the first frame 16 and the second frame 19 slightly towards the rearward position (but without reaching it), the second retaining temple 23 and the third retaining pad 31 are placed in the inactive condition (releasing the suction effect). The first retaining device 17 and the second retaining device 20 are operated according to the respective first operating conditions. Simultaneously or subsequently, the third mandrel 13 is actuated to wind the first ribbon portion 100 separated from the first ribbon portion 100 bearing the first free end, and the second mandrel 12 is actuated to wind the second ribbon portion 101 separated from the second ribbon portion 101 bearing the first free end. In this way, a configuration of the apparatus 10 is achieved, schematically illustrated in figure 7, in which the first retaining pad 22 retains the first ribbon at the first free end and the fourth retaining pad 32 retains the second ribbon at the first free end. These two free ends are placed head to head and in direct contact.

Subsequently, the first retaining pad 22 is deactivated by releasing the suction on the first ribbon 100 and simultaneously the third retaining pad 31 is activated by sucking air from the environment and retaining the first ribbon 100 released by the first retaining pad 22. The second retaining device 20 is operated according to the second operating condition.

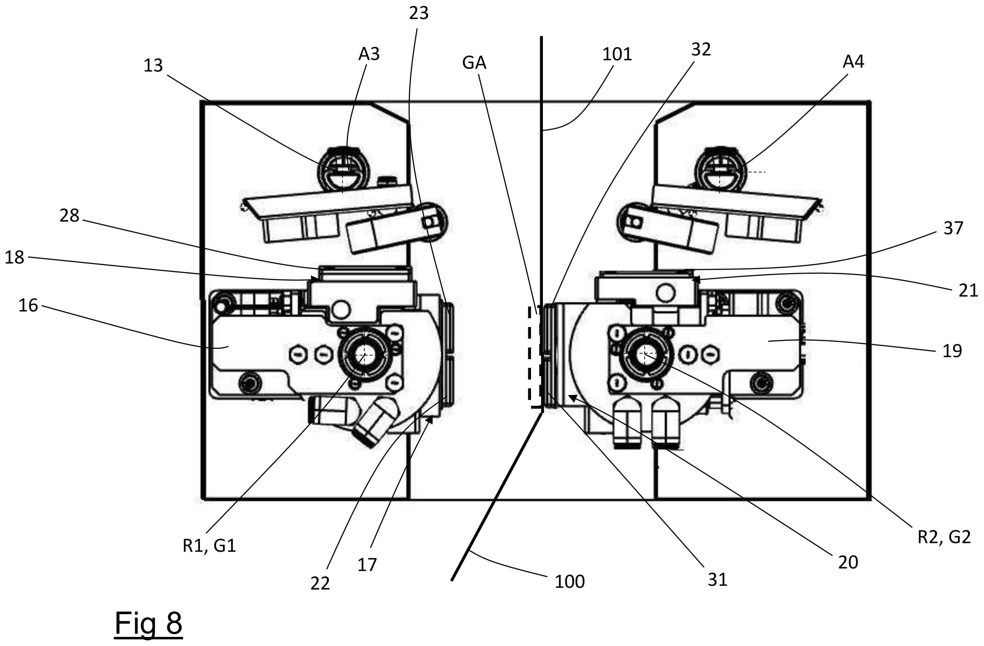

Subsequently, the first frame 16 is brought into the distanced position with the second frame 19 still in the neared position, as illustrated in figure 8. Once the distanced position is reached, the first retaining device 17 is placed in the non-operating position and at the same time the first splicing device 18 is placed in the application condition, as schematically illustrated in figure 9. These operations are carried out by rotating the first retaining device 17 about the first retaining rotation axis R1 and rotating the first splicing device 18 about the first splicing rotation axis G1. The second retaining device 20 continues to operate according to the second operating condition.

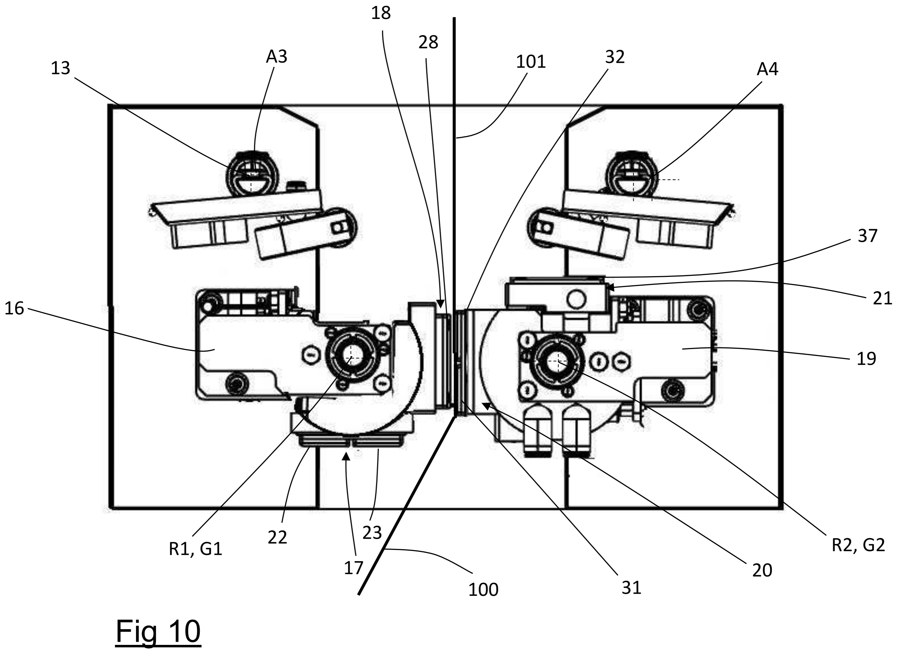

Subsequently, the first frame 16 is brought into the neared condition, as illustrated in figure 10. The piece of splicing ribbon 102 is brought into contact with the first ribbon 100 and the second ribbon 101 by splicing them together at the respective first free ends. This operation is carried out with the second retaining device 20 in the second operating condition. The first and second frames 16, 19 are then brought into the distanced condition and once the distanced position is reached, the first retaining device 17 is placed in the operating position and at the same time the first splicing device 18 is placed in the waiting condition.

In the second splicing case, the second ribbon 101 is loaded onto the second mandrel 12, is partially unwound and brought onto the fourth mandrel 14 where it is partially wound. The first ribbon 100 is already mounted on the first mandrel 11 and driven by the return roller 15. The first frame 16 and the second frame 19 are in the distanced condition from the splicing area GA.

Before loading the second ribbon 101 onto the second mandrel 12 or thereafter, the pad 37 of the second splicing device 21 is placed in the loading condition to apply a piece of splicing ribbon 102 onto the suction surface 37a of the pad 37. This operation is carried out by resting the non-adhesive surface of the piece of splicing ribbon 102 on the suction surface. This operation is carried out with the second retaining device 20 directly facing the splicing area GA. This operation is carried out with the third retaining pad 31 and the fourth retaining pad 32 not active. This condition provides that the suction surfaces 31a, 32a are not sucking air from the surrounding environment. This operation is also carried out with the first retaining device 17 directly facing the splicing area GA and with the first retaining pad 22 and the second retaining pad 23 not active.

When the pad 37 of the second splicing device 21 receives the piece of splicing ribbon 102, the pad 37 is brought into the waiting condition, without the second retaining device 20 and the first retaining device 17 being actuated or shifted.

Subsequently, the first frame 16 and the second frame 19 are simultaneously brought into the advanced condition.

During this operation, the first retaining pad 22 and the second retaining pad 23 contact the first ribbon 100 and the third retaining pad 31 and the fourth retaining pad 32 contact the second ribbon 101. The first retaining device 17 and the second retaining device 20 are operated according to the respective second operating conditions. This operation is carried out with the first retaining pad 22, the second retaining pad 24, the third retaining pad 31 and the fourth retaining pad 32 active. This condition provides that the respective suction surfaces suck air from the surrounding environment. In this way, the first ribbon 100 is retained by the first retaining device 17 and the second ribbon is retained by the second retaining device 20 in the splicing area GA.

By maintaining the configuration reached by the apparatus 10, the cutting device 40 is actuated. The cutting blade 41 slides along the cutting direction and cuts both the first ribbon 100 and the second ribbon 101. Such cutting defines a first free end of the first ribbon 100 on the portion of the first ribbon 100 that reaches the return roller 15 and a first free end of the second ribbon 101 on the portion of the second ribbon 101 wound on the second mandrel 12.

At this point, possibly by shifting the first frame 16 and the second frame 19 slightly towards the rearward position (but without reaching it), the first retaining temple 22 and the fourth retaining pad 32 are placed in the inactive condition (releasing the suction effect). The first retaining device 17 and the second retaining device 20 are operated according to the respective first operating conditions. Simultaneously or subsequently, the fourth mandrel 14 is actuated to wind the second ribbon portion 101 separated from the second ribbon portion 101 bearing the first free end, and the first mandrel 11 is actuated to wind the first ribbon portion 100 separated from the first ribbon portion 100 bearing the first free end. In this way a configuration of the apparatus 10 is achieved in which the second retaining pad 23 retains the first ribbon at the first free end and the third retaining pad 31 retains the second ribbon at the first free end. These two free ends are placed head to head and in direct contact.

Subsequently, the third retaining pad 31 is deactivated by releasing the suction on the second ribbon 101 and simultaneously the first retaining pad 22 is activated by sucking air from the environment and retaining the second ribbon 101 released by the third retaining pad 31. The first retaining device 17 is operated according to the second operating condition.

Subsequently, the second frame 19 is brought into the distanced position with the first frame still in the neared position, as illustrated in figure 11. Once the distanced position is reached, the second retaining device 20 is placed in the non-operating position and at the same time the second splicing device 21 is placed in the application condition, as schematically illustrated in figure 12. These operations are carried out by rotating the second retaining device 20 about the second retaining rotation axis R2 and rotating the second splicing device 21 about the second splicing rotation axis G2. The first retaining device 17 continues to operate according to the second operating condition.

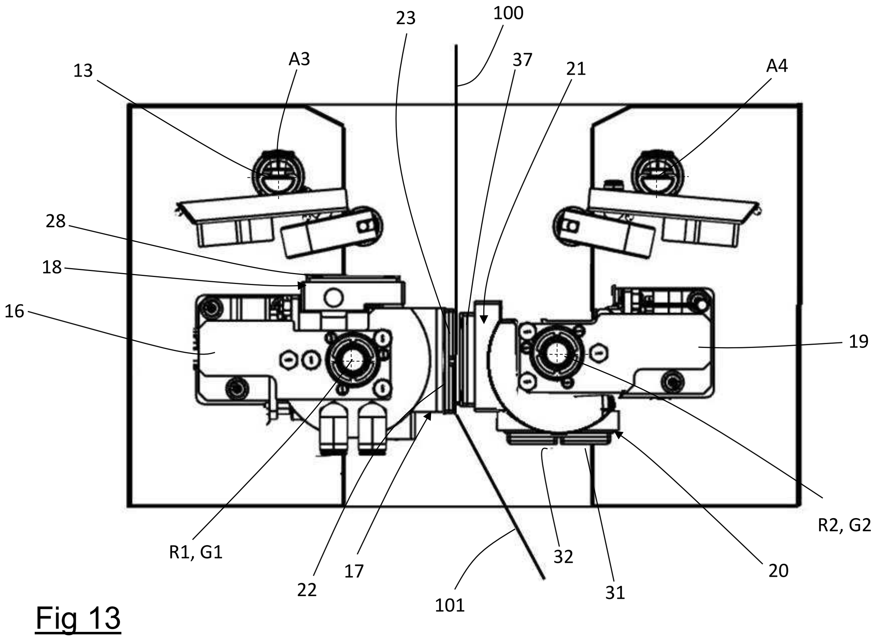

Subsequently, the second frame 19 is brought into the neared condition, as illustrated in figure 13. The piece of splicing ribbon 102 is brought into contact with the first ribbon 100 and the second ribbon 101 by splicing them together at the respective first free ends. This operation is carried out with the first retaining device 17 in the second operating condition. The first and second frame 16, 19 are then brought into the distanced condition and once the distanced position is reached, the second retaining device 20 is placed in the operating position and simultaneously the second splicing device 21 is placed in the waiting condition.

In an electrochemical cell production method, when a reel of electrode ribbon or separator ribbon is running out, it is possible to implement a reel change in accordance with what is described above. In this production method, the electrode and reel separator ribbons are fed to the forming station 202, cut in the cutting station 203, to form a semi-finished product with an overlapping layer structure with the pieces of electrode and separator ribbon.

## Claims

1. Apparatus (10) for splicing a first ribbon (100) to a second ribbon (101) to perform a reel change in electrochemical cell production, comprising:
a first retaining device (17) movable between an operating condition in which it directly faces a splicing area (GA) and a non-operating condition in which it is not directly facing said splicing area (GA), wherein in the operating condition the first retaining device (17) is configured to operate at least according to a first retaining condition in which it retains a first ribbon (100) in the splicing area (GA) and according to a second retaining condition in which it retains both the second ribbon (101) and the first ribbon (100) in said splicing area (GA);
a second retaining device (20) movable between an operating condition in which it directly faces said splicing area (GA) and a non-operating condition in which it is not directly facing said splicing area (GA), wherein in the operating condition the second retaining device (20) is configured to operate according to a first retaining condition in which it retains a second ribbon (101) in said splicing area (GA) and according to a second retaining condition in which it retains both the second ribbon (100) and the first ribbon (101);
a cutting device (40) configured to cut the first ribbon (100) to define a first free end of the first ribbon (100) and to cut the second ribbon (101) to define a first free end of the second ribbon (101);
a first splicing device (18) and a second splicing device (21) configured to splice the first free end of the first ribbon (100) to the first free end of the second ribbon (101);
wherein said first splicing device (18) and said second splicing device (21) comprise a respective pad (28, 37) configured to receive and apply a piece of splicing ribbon (102), wherein said pad (28) of the first splicing device (18) is movable between a waiting condition in which said pad (28) is not directly facing said splicing area (GA) and an application condition in which said pad (28) directly faces said splicing area (GA) and wherein said pad (37) of the second splicing device (21) is movable between a waiting condition in which said pad (37) is not directly facing said splicing area (GA) and an application condition in which said pad (37) directly faces said splicing area (GA);
wherein when said first retaining device (17) operates according to the first retaining condition said pad (28) of the first retaining device (18) is in the waiting condition;
wherein when said second retaining device (20) operates according to the first retaining condition said pad (37) of the second retaining device (20) is in the waiting condition;
wherein when said pad (28) of the first retaining device (18) is in the application condition, said first retaining device (17) is in the non-operating condition and said second retaining device (20) operates according to the second retaining condition;
wherein when said pad (37) of the second retaining device (20) is in the application condition, said second retaining device (20) is in the non-operating condition and said first retaining device (17) operates according to the second retaining condition.

2. Apparatus (10) according to claim 1, wherein said pad (28) is further movable between said waiting condition and a loading condition in which said pad (28) is directly accessible to receive the piece of splicing ribbon (102); in said loading condition said pad (28) not directly facing said splicing area (GA).

3. Apparatus (10) according to claim 1 or 2, comprising a first frame (16) translatable between a neared position to said splicing area (GA) and a distanced position from said splicing area (GA); said first splicing device (18) being rotatably mounted on said first frame (16) about a first splicing rotation axis (G1) to rotate said pad (28) with respect to said first frame (26) between the waiting condition and the application condition.

4. Apparatus (10) according to claim 3, wherein said first retaining device (17) is rotatably mounted on said first frame (16) about a first retaining rotation axis (R1) to rotate between the operating condition and the non-operating condition, wherein said first retaining rotation axis (R1) is parallel to said first splicing rotation axis (G1) or coincident with said first splicing rotation axis (G1).

5. Apparatus (10) according to claim 4, wherein said first splicing device (18) and said first retaining device (17) are made integral by rotations about said first splicing rotation axis (G1) and said first retaining rotation axis (R1), respectively, with respect to said first frame (16).

6. Apparatus (10) according to claim 2, wherein said first splicing device (18) comprises a rectilinear guide (29) and said pad (28) comprises a slide (30) slidably mounted on said rectilinear guide (29) to make the pad (28) translatable along the splicing device (18) between the loading condition and the waiting condition and between the waiting condition and the loading condition.

7. Apparatus (10) according to claim 3 or 4, wherein said pad (28) rotates between the waiting condition and the application condition when said first frame (16) is in the distanced position.

8. Apparatus (10) according to any one of the preceding claims, wherein the first retaining device (17) comprises a first retaining pad (22) and a second retaining pad (23), wherein the second retaining device (20) comprises a third retaining pad (31) and a fourth retaining pad (32), wherein each retaining pad is switchable between an active condition in which it retains by suction a respective ribbon portion and an inactive condition in which it does not retain any ribbon portion.

9. Apparatus (10) according to claims 3 and 8, wherein when the first frame (16) is in the distanced position and when the second retaining device (20) is operating according to the second retaining condition the third retaining pad (31) and the fourth retaining pad (32) are in the active condition and the first retaining pad (22) and the second retaining pad (23) are in the inactive condition.

10. Apparatus (10) according to any one of the preceding claims comprising a second frame (19) translatable between a neared position to said splicing area (GA) and a distanced position from said splicing area (GA), wherein said second retaining device (20) is mounted on said second frame (19); said cutting device (40) comprising a cutting blade (41) slidably mounted on said second frame (19).

11. Apparatus (10) according to claim 8 and 10, wherein said cutting blade (41) is slidably mounted along a cutting direction extending between the third retaining pad (31) and the fourth retaining pad (32).

12. Machine configured for the production of electrochemical cells, comprising:
an electrode and separator ribbon feed station;
a forming station configured to package said electrode and separator ribbons to form a semi-finished product with an overlapping layer structure;
wherein said electrode and separator ribbon feed station comprises at least one apparatus (10) for splicing a first ribbon (100) to a second ribbon (101) for performing a reel change according to any one of the preceding claims.

13. Electrochemical cell production method, where the method comprises:
feeding electrode and separator ribbons in reels;
cutting said electrode and separator ribbons into pieces of electrode and separator ribbons;
forming a semi-finished product with an overlapping layer structure with said pieces of electrode and separator ribbons; wherein when a reel of electrode or separator ribbon is running out, a reel change is to be performed using an apparatus (10) for splicing a first ribbon (100) to a second ribbon (101) according to any one of claims 1 to 11.
